# EUROPÄISCHE PATENTSCHRIFT

(11) **EP 0 936 139 B1**
(45) Veröffentlichungstag und Bekanntmachung des Hinweises auf die Patenterteilung: **10.12.2003**
(21) Anmeldenummer: 99102345.8
(22) Anmeldetag: 06.02.1999
(51) Int. Cl.: B64C 1/14

(54) **Doppelscheiben-Kabinenfenster für ein Flugzeug**
Double-glazing cabin window for aircraft
Fenêtre à double vitrage pour cabine d'aéronef

(30) Priorität: 14.02.1998 DE 19806106
(43) Veröffentlichungstag der Anmeldung: 18.08.1999
(73) Patentinhaber: Airbus Deutschland GmbH, 21129 Hamburg (DE)
(72) Erfinder: Müller, Rainer, Dipl.-Ing., 21224 Rosengarten (DE); Uhlemann, Sven, Dipl.-Ing., 25436 Uetersen (DE); Scherer, Thomas, Dr.-Ing., 22559 Hamburg (DE); Lütjens, Heiko, Dipl.-Ing., 25421 Pinneberg (DE)
(74) Vertreter: Hansmann, Dierk, Dipl.-Ing.

(56) Entgegenhaltungen:
- EP-A- 0 846 615
- EP-A- 0 846 616
- US-A- 2 332 060

## Beschreibung

Die Erfindung bezieht sich auf ein Doppelscheiben-Kabinenfenster für ein Flugzeug gemäß dem Oberbegriff des Anspruches 1. Mit ihm wird während des Fluges keine Beeinträchtigung der Sichtverhältnisse durch beschlagene Kabinenfensterscheiben eintreten. Ein derartiges Fenster ist aus US-A-2 332 060 bekannt.

Die gegenwärtig eingesetzten Kabinenfenster im Passagier-Flugzeugbau besitzen einen Doppelscheiben-Aufbau (Fail Save Aufbau), bei dem zwei Kabinenfensterscheiben einen Scheibenzwischenraum (Hohlraum) einschließen. Nach dieser Kabinenfenster-Lösung befindet sich an der Unterseite der Innenfensterscheibe eine Ventilationsbohrung (Ausgleichsbohrung), um im Scheibenzwischenraum während des Fluges, insbesondere beim Steig- und Sinkflug eines Passagierflugzeuges, einen Druckausgleich zu realisieren. Dabei findet über die Bohrung, bedingt durch das Druckgefälle zwischen dem Rumpfinneren (Kabinenraum) und dem Scheiben-Zwischenraum, ein Luftaustausch statt. Für den Fall, bei dem der Druck in der Kabine im Verhältnis zum Druck im Scheibenzwischenraum größer ist, kann Luft in den Hohlraum eintreten. Da die Außenfensterscheibe des Kabinenfensters in der Regel während des Fluges einer Temperatur von unter Minus dreißig Grad Celsius (-30°C) ausgesetzt ist, kondensieren selbst geringe Anteile an Wasserdampf in der Kabinenluft an der Innenseite der Außenfensterscheibe aus. Dabei ist die relative Luftfeuchtigkeit vom Flugzustand des Flugzeuges abhängig. Es reicht schon eine geringe Luftfeuchtigkeit aus, damit es im Fensterscheiben-Zwischenraum zur Taupunktunterschreitung kommt und der Wasserdampf dort aus der Luft auskondensiert. Galleybetrieb, Passagieranzahl, Flugdauer und Flugeinsatzgebiet haben einen wesentlichen Einfluß auf den Anteil an Wasserdampf in der Kabinenluft. Ausgehend von der Wasserdampfabgabe der Passagiere und dem Wasserdampf vom Galleybetrieb während des Fluges sowie den herrschenden Luftverhältnissen bei Start und Landung eines Flugzeuges ist die an der Ventilationsbohrung anstehende Luft mit mehr oder weniger Wasserdampf beladen. Dabei gelangt die mit Wasserdampf beladene Kabinenluft über Schlitze und Verkleidungsstöße hinter die Kabinenfensterverkleidung in den Bereich eines Fenstertrichters an die Ventilationsbohrung. Durch den Druckwechsel in der Passagierkabine strömt die relativ feuchte Luft über die Ventilationsbohrung in den Fensterscheibenzwischenraum. Insbesondere, wenn die relative Luftfeuchtigkeit höher ist, beispielsweise bei größerer Auslastung des Passagierflugzeuges, kann es zum Beschlagen der Kabinenfensterscheibe kommen.

Infolge der niedrigen Außentemperaturen im Flug setzt außerdem an der Außenscheibe eine Eisbildung ein, da auf deren Innenseite eine sehr niedrige Oberflächentemperatur von etwa Minus zwanzig Grad Celsius (-20°C) herrscht. Die tiefen Temperaturen im Scheibenzwischenraum führen dabei schon bei sehr geringen, absoluten Feuchten der Luft zur Wasserdampfkondensation an der Innenseite der Außenfensterscheibe. Das gilt insbesondere bei hoher Auslastung des Flugzeuges. Geht das Flugzeug in den Sinkflug über, taut die dünne Eisschicht beim Erreichen des Flugzeuges von wärmeren Luftschichten auf. Danach bildet sich Wasser, das zum Beschlagen der Fensterscheiben und im Extremfall zu seiner Ansammlung an der Unterseite des Scheibenzwischenraumes führt.

Aus der DE-PS 933 371 ist eine weitere Doppelscheiben-Anordnung für ein Flugzeugfenster bekannt, nach der der Scheibenzwischenraum durch eine unmittelbare Verbindung mit der Luft im Kabinenraum druckausgeglichen wird. Dabei ist eine mit einem(r) Trockenmittel(tablette) gefüllte (besetzte) Trockenpatrone, die in einer Öffnung der Innenscheibe der Doppelscheiben-Anordnung sitzt und an dieser befestigt ist, zur Absorption der Luftfeuchtigkeit zwischen den Doppelscheiben vorgesehen. Die Trockenpatrone weist einen Kanal auf, welcher die unmittelbare Verbindung des Scheibenzwischenraumes mit der Kabinenluft herstellt. Ein der Trockenpatrone vorgeschaltetes Ventil, das sich bei eintretenden Druckunterschieden öffnet und einen raschen Druckausgleich ermöglicht, soll den freien Zutritt feuchter Kabinenluft zur Trockenpatrone verhindern. Ungeachtet dessen, das die zusätzliche Installation der Trockenpatrone eine Gewichtszunahme des Flugzeuges bedeutet, unterliegt das Material des sich öffnenden Ventils, das mit einem - durch eine Gummischeibe oder dergleichen gebildeten - Spalt gebildet wird, der sich wie ein Lippenventil bei Druckunterschieden öffnet, einer gewissen Alterung bzw. Ermüdung. Das Gummimaterial wird (sehr rasch) verkleben, infolge dessen sich die Sichtverhältnisse einer derartigen Doppelscheiben-Anordnung drastisch vermindern und deswegen der Ersatzteilbedarf (wegen der Beseitigung derartiger Ventilstörungen) entsprechend hoch ausfallen wird.

Außerdem ist eine Doppelscheiben-Anordnung bekannt, bei der ein in den Fensterscheiben-Zwischenraum geführtes Adapterelement über einen ihm adaptierten Verbindungsschlauch mit dem Rumpfinneren (Kabinenraum) verbunden ist. Dabei ist dem nichtadaptierten Schlauchende des Verbindungsschlauches ein auf der Innenseite der metallenen Außenhaut befestigtes metallenes Zwangskondensationsrohr (Belüftungsrohr) angeschlossen.

Dabei nimmt das Zwangskondensationsrohr einen Teil der dem Rumpfinneren entweichenden verbrauchten und relativ feuchten Kabinenluft bei einsetzendem Luftdruckausgleich zwischen dem Rumpfinneren und dem Fensterscheiben-Zwischenraum auf. Aufgrund von Druckunterschieden, insbesondere während des Druckausgleiches im Sinkflug des Flugzeuges, wird die relativ feuchte Luft durch das Zwangskondensationsrohr und den Verbindungsschlauch angesogen. Dabei wird der in der Luft enthaltene Wasserdampf im kalten Kondensationsrohr auskondensieren, dessen Querschnitt derart ausgelegt ist, daß bei der Vereisung des Kondensats genügend Strömungsquerschnitt frei bleibt, damit das Eis spätestens im Sinkflug taut und in Form von Wassertropfen abtropft.

Bei den bekannten Lösungen wird ein Beschlagen und Vereisen der Doppelscheiben-Kabinenfenster eines Flugzeuges entweder garnicht verhindert oder nur mit der Installation von Vorrichtungen zur Absorption der relativ feuchten Luft (durch Trocknung bzw. Zwangskondensation der relativ feuchten Luft eines druckausgeglichenen Fensterscheiben-Zwischenraumes) erreicht. Die Installation solcher Zusatz-Vorrichtungen erfordert eine Erweiterung des Montage- und auch Wartungsaufwandes. Gleichermaßen wird eine Zunahme des Flugzeuggewichtes eintreffen. Damit werden auch Störstellen installiert, die sogar - bei Einsatz der Trockenpatrone mit vorgeschaltenem Ventil - bis zum Totalausfall der Sichtverhältnisse eines Doppelscheiben-Kabinenfensters führen können. Derartige Lösungen eignen sich kaum als Anpaßlösung für die gegenwärtig im Flugzeug eingerüsteten Kabinenfenster, da sie außerdem einen erhöhten Material- und Montageaufwand erfordern.

Demzufolge liegt der Erfindung die Aufgabe zugrunde, ein gattungsgemäßes Doppelscheiben-Kabinenfenster für ein Flugzeug derart zu verbessern, daß mit ihm - ohne zusätzlich Anbauteile und ohne Nutzung eines aktiven Druckregelsystems - ein Beschlagen und Vereisen der Kabinenfensterscheiben verhindert wird. Mit der Erfindung wird angestrebt, durch einfache Montage und ohne wesentliche Veränderung der Flugzeugstruktur die gegenwärtig eingerüsteten Doppelscheiben-Kabinenfenster zu modifizieren.

Diese Aufgabe wird durch die im Anspruch 1 angegebenen Maßnahmen gelöst. In den weiteren Ansprüchen sind zweckmäßige Ausgestaltungen dieser Maßnahmen angegeben.

Die Erfindung ist in einem Ausführungsbeispiel näher beschrieben. Es zeigen
- Fig. 1: ein gegenwärtig (im Passagier-Flugzeug) eingesetztes Doppelscheiben-Kabinenfenster mit einer im unteren Randbereich der Innenfensterscheibe befindlichen Ventilationsbohrung und den vorgesehenen Modifikationen;
- Fig. 2: die Schnittsdarstellung C - C des Doppelscheiben-Kabinenfensters nach Fig. 1 - ohne Ventilationsbohrung - und mit Darstellung eines Kondensationskanals;
- Fig. 3: die Schnittsdarstellung A - A des Doppelscheiben-Kabinenfensters nach Fig. 1 mit detaillierter Darstellung des Kondensationskanales im oberen Randbereich des Kabinenfensters;
- Fig. 4: die Schnittsdarstellung B - B des Doppelscheiben-Kabinenfensters nach Fig. 1 mit detaillierter Darstellung des Kondensationskanales im unteren Randbereich des Kabinenfensters.

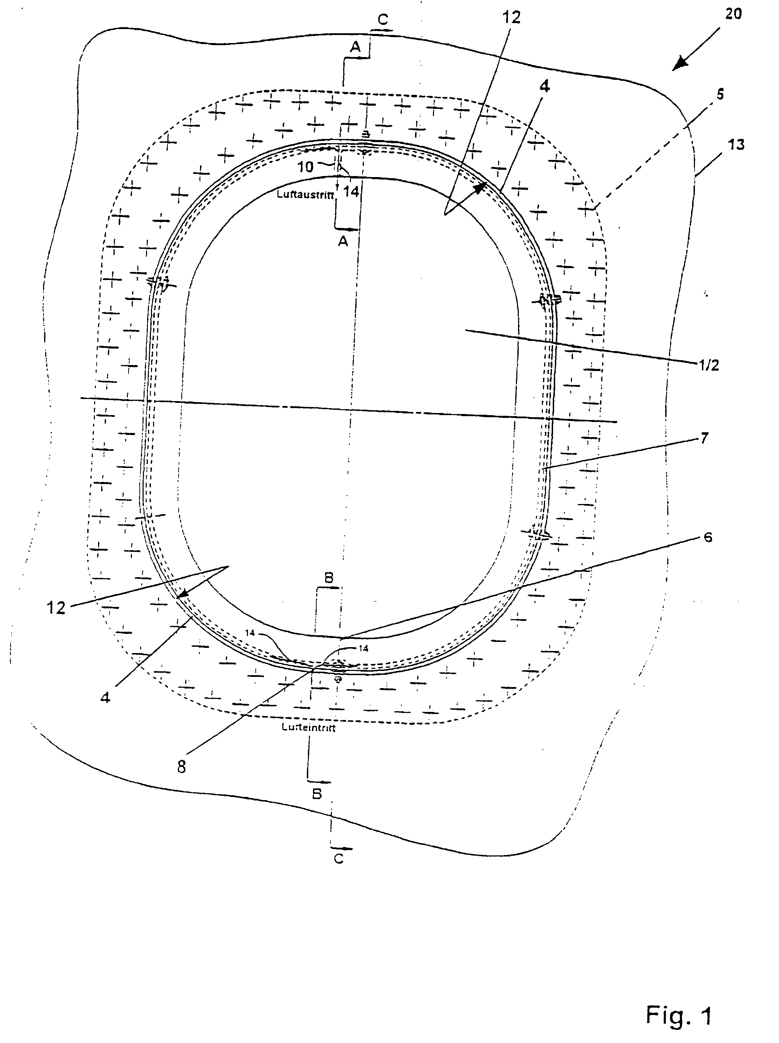

Die Lösung geht davon aus, daß der Doppelscheiben-Aufbau (Fail Save Aufbau) von gegenwärtig verwendeten Doppelscheiben-Kabinenfenstern 20 im Passagier-Flugzeugbau erhalten bleibt. In der Fig. 1 ist der Doppelscheiben-Aufbau dieses bekannten Kabinenfensters in einer Vorderansicht dargestellt. Die Ansicht zeigt eine Anordnung der Innen- und Außenfensterscheibe 1, 2 innerhalb des Kabinenfensterrahmens 5. Der Kabinenfensterrahmen 5 selbst wird zum Teil von der Außenhaut 13 des Flugzeuges überdeckt. An der Unterseite des in der Fig. 1 dargestellten Doppelscheiben-Kabinenfensters 20 befindet sich eine Ventilationsbohrung 6, welche den Druckausgleich zwischen dem (hier nicht erkennbaren) Fensterscheiben-Zwischenraum 3 und dem (nicht gezeigten) Rumpfinnenraum (Kabinenraum) ermöglicht. Über diese Ventilationsbohrung 6 (Ausgleichsbohrung zur Belüftung) findet herkömmlich ein Luftaustausch statt, der die vorbeschriebenen Nachteile eintreten läßt.

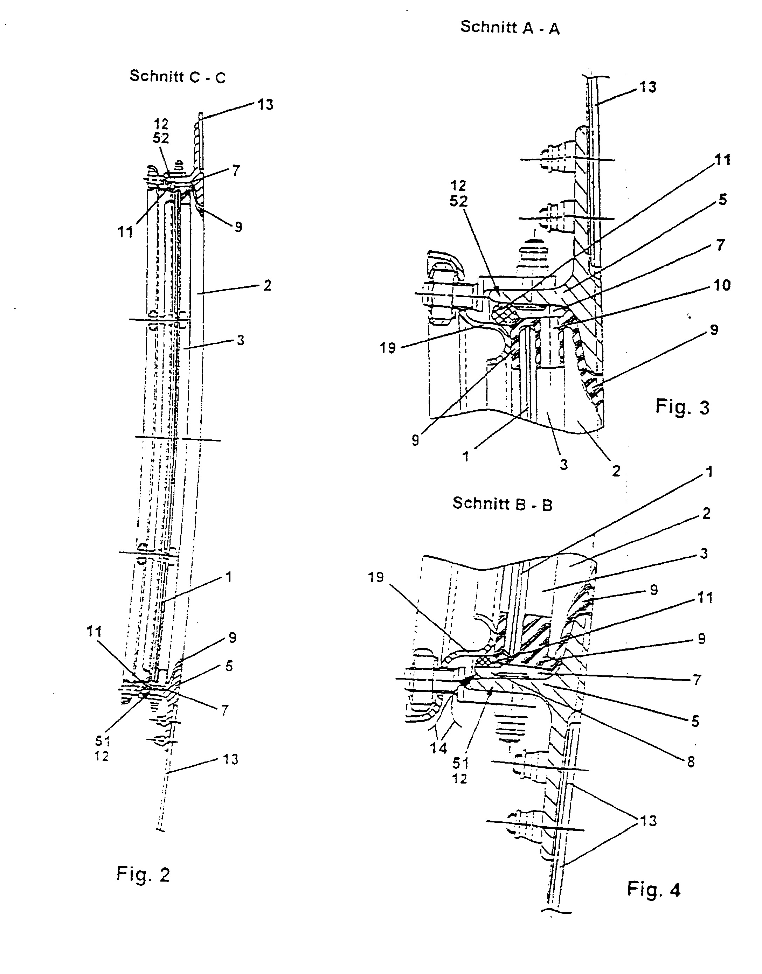

Ein beschlagfreies Doppelscheiben-Kabinenfenster 20 erhält man durch den Wegfall der Ventilationsbohrung 6 und durch die Realisierung zusätzlicher Maßnahmen, die in der Schnittdarstellung C - C nach Fig. 2 und detaillierter in den Schnittdarstellungen A - A nach Fig. 3 und B - B nach Fig. 4 gezeigt sind

Die weiteren Ausführungen setzen voraus, daß die Kabinenfensterscheiben (Innen- und Außenfensterscheibe 1, 2) innerhalb des Kabinenfensterrahmens 5 mittels einer Fensterdichtung 9 fest und dicht sitzen. Dabei strömt aus dem Inneren des (bildlich nicht dargestellten) Flugzeug-Druckrumpfes - infolge des (vorerwähnten) stattfindenden Druckausgleiches zwischen dem Kabinenraum und dem Fensterscheiben-Zwischenraum 3 - relativ feuchte Luft 14 (Kabinenluft) in einen Kanal 7, der funktionell einen Kondensationskanal darstellt.

Der Kanal 7 wird durch den Schenkelrahmen 4 (des Kabinenfensterrahmens 5), die Fensterdichtung 9 und die Zusatzdichtung 11 gebildet. Dabei verläuft der Kanal 7 über seine gesamte Kanallänge unmittelbar auf dem Schenkelprofil 12 entlang des (metallenen) Schenkelrahmens 4, der (integrierter) Bestandteil des (metallenen) Kabinenfensterrahmens 5 ist.

In der Fig. 1 wird außerdem die Strömungsrichtung der druckausgeglichenen Luft 14 gezeigt, die im unteren Fensterbereich (an der Stelle des gelegten Schnittes B - B) durch eine erste Öffnung 8 (Luftausgleichsbohrung) in den Kanal 7 einströmt und (langsam) durch den Kanal 7 aufsteigt, bis sie eine zweite Öffnung 10 [eine Luftein- und -auslaßbohrung] (an der Stelle des gelegten Schnittes A -A) erreicht, von dort aus sie in den (in der Fig. 1 nicht gezeigten) Fensterscheiben-Zwischenraum 3 eindringt. Dabei wird die über den Kanal 7 strömende (relativ feuchte) Luft 14 am metallenen Schenkelrahmen 4 auskondensieren, der die auf der Außenhaut 13 des Flugzeuges aufliegende kalte Außentemperatur besitzt. Aus den Schnittdarstellungen B -B und A - A nach den Figuren 3 und 4 kann man die Anordnung der beiden Öffnungen 8, 10 und des Kanals 7 in einer Querschnittsdarstellung des oberen und unteren Fensterbereiches besser entnehmen.

In der Fig. 2 wird die Schnittsdarstellung C - C des Doppelscheiben-Kabinenfensters 20 nach der Fig. 1 - ohne Ventilationsbohrung - und mit Darstellung des Kanals 7 gezeigt. Es handelt sich dabei um eine Querschnittsdarstellung des gesamten Fensterbereiches. Der nach Fig. 1 beschriebene Autbau (ohne Ventilationsbohrung 6) wird anhand der Fig. 2 derart vervollständigt, indem man aus dem im Querschnitt dargestellten Autbau des Doppelscheiben-Kabinenfensters 20 an der Stelle des Schnittes C - C nach der Fig. 1 den festen und dichten Sitz der Innen- und Außenfensterscheibe 1, 2 mittels der Fensterdichtung 9 im oberen und unteren Schenkelbereich 52, 51 des Schenkelrahmens 4 (innerhalb) des Kabinenfensterrahmens 5 erkennt.

Die Randbereiche des Doppelscheiben-Kabinenfensters 20 sind in den Figuren 3 und 4 detalliert veranschaulicht. Beide Darstellungen lassen erkennen, daß der vertikale Abschnitt der Fensterdichtung 9 vollständig dicht und fest dem Kabinenfensterrahmen 5 aufliegt. Dem horizontalen Abschnitt der Fensterdichtung 9 ist randseitig eine Zusatzdichtung 11 befestigt, die dem nämlichen Schenkelrahmen 4, der - fensterinnenseitig betrachtet - integrierter Bestandteil des Kabinenfensterrahmens 5 ist, (ziemlich nahe) am Schenkelende aufliegt. Die Zusatzdichtung 11 wird dabei durch den Andruckrahmen 19 an den Schenkelrahmen 4 gedrückt.

Der Kanal 7 wird also durch die (dem Schenkelrahmen 4 randseitig aufliegende) Zusatzdichtung 11, durch den ihr befestigten (horizontalen und schenkelrahmeninnenseitig) nicht aufliegenden Teilbereich der Fensterdichtung 9 und durch den Innenbereich des Schenkelrahmens 4 selbst (umfänglich diesem verlaufend) eingegrenzt.

Dabei ist es von Vorteil, die befestigte Anordnung der Zusatzdichtung 11 an der Fensterdichtung 9 durch Integration der beiden Dichtungen 9, 11 zu einem (gemeinsamen) Dichtkörper zu ersetzen.

Außerdem drückt ein am Schenkel(profil 12) des Schenkelrahmens 4 (in geeigneter Art und Weise) befestigter Andruckrahmen 19 am (fensterinnenseitig sichtbaren) Umfangsbereich der Fensterdichtung 9 an, wobei die Andruckelemente-Auflagefläche des Andruckrahmens 19 horizontal fest gegen den (fensterinnenseitig freiliegenden) Bereich der Fensterdichtung 9 drückt, um die Scheibenlage und den Abdichtbereich der Doppelscheiben-Anordnung zu stabilisieren.

In der Fig. 4 wird mit dargestellt, daß die Zusatzdichtung 11 an der Schnittstelle B -B (nach Fig 1) mit einer ersten Öffnung 8 versehen ist, die man einfacherhalber als Bohrung ausführen kann. Dieser Bohrungsquerschnitt kann auch auf mehrere derartige Öffnungen in der Zusatzdichtung 11 im unteren Schenkelbereich 51 verteilt werden, um der Gefahr einer möglichen Zueisung vorzubeugen.

Die als Durchgangsloch ausgeführte erste Öffnung 8, welche bis in Höhe des Kanals 7 die Zusatzdichtung 11 vollständig durchdringt, ist dafür geeignet, während des Druckausgleiches die von der Kabine durch die Innenverkleidung des Flugzeuges strömende Luft 14 aufzunehmen, die dann durch diese (sogenannte) Luftausgleichsbohrung in den Kanal 7 weiter strömen wird.

Danach wird die Luft 14 im Kanal 5 - entlang der links- und rechtsseitlich angeordneten Schenkel des Schenkelrahmens 4 (bzw. des Kabinenfensterrahmens 5) - zum oberen Randbereich des Doppelscheiben-Kabinenfensters 20 (langsam) aufsteigen, der in der Fig. 3 als Schnittdarstellung, (des an der Stelle A -A nach der Fig. 1 gelegten Schnittes) gezeigt wird.

Dabei wird die im Kanal 5 aufsteigende Luft 14 an der kalten Schenkel-Oberfläche des (metallenen) Schenkelrahmens 4 auskondensieren, bevor sie eine zweite Öffnung 10 innerhalb des oberen Randbereiches des Doppelscheiben-Kabinenfensters 20 passiert. Mit der zweiten Öffnung 10 wird (an der genannten Stelle A - A) zwischen dem Kanal 7 und dem Fensterscheiben-Zwischenraum 3 eine Luftverbindung hergestellt. Diese zweite Öffnung 10 wird günstigerweise auch als Durchgangsloch ausgeführt, das vollständig durch die Fensterdichtung 9 (bis in den Fensterscheiben-Zwischenraum 3) führt. Die rechts- und / oder linksseitig dem Kanal 7 aufsteigende (und bereits auskondensierte) Luft 14 kann über die zweite Öffnung 10 in den Fensterscheiben-Zwischenraum 3 dringen, die im gegensätzlichen Fall umgekehrte Druckverhältnisse auch über diese zweite Öffnung 10 (in umgekehrter Richtung) über den Kanal 7 die erste Öffnung 8 retour aus dem Fenster entweicht. Deshalb stellt die zweite Öffnung 10 funktionell eine (sogenannte) Luftein- und -auslaßbohrung dar.

Beide Öffnungen 8 und 10 sind zueinander in genügender Entfernung positioniert, wobei die erste Öffnung 8 (an der Stelle B - B des nach der Fig. 1 gelegten Schnittes) nahezu horizontal (etwa parallel dem unteren Schenkelbereich 51 des Schenkelrahmens 4) durch die Zusatzdichtung 11 (bis in den Kanal 7) gebohrt ist. Die (an der Stelle A -A des nach der Fig. 1 gelegten Schnittes) gelegene zweite Öffnung führt (vom Kanal 7 aus) lotrecht durch die Fensterdichtung 9 bis in den Fensterscheiben-Zwischenraum 3. Der Strömungsquerschnitt beider Luftverbindungen kann zueinander abweichen. Dabei kann der Strömungsquerschnitt der zweiten Öffnung 10 größer dem Strömungsquerschnitt der ersten Öffnung 8 sein. Beide Öffnungen 8 und 10 werden aber zumindestens mit einem gleichen Strömungsquerschnitt ausgeführt.

Abschließend läßt sich zusammenfassen, daß im Vergleich der herkömmlich eingesetzten Doppelscheiben-Kabinenfenster eines Flugzeuges mit dem beispielgemäßen Kabinenfenster letzterem ein (sogenannter) Kanal 7 (Kondensationskanal) integriert wird. Dabei wird der Kanal 7 durch die Anordnung der Zusatzdichtung 11 zur Fensterdichtung 9 und den metallenen Kabinenfensterrahmen 5 (genauer: dem Schenkelrahmen 4 als integrierter Bestandteil des Kabinenfensterrahmens 5) gebildet. Mit dem Entfallen der üblicherweise bisher eingesetzten Ventilationsbohrung 6 (Belüftungsbohrung am unteren Scheibenrand der Innenfensterscheibe 1) wird stattdessen an der Unterseite einer (der Fensterdichtung 9 befestigten bzw. integrierten) Zusatzdichtung 11 eine erste Öffnung 8 (eine Luftausgleichsbohrung) mit Luftverbindung zum Kanal 7 installiert. Außerdem wird (oberhalb der gleichartigen Dichtungsanordnung) an der Oberseite der Fensterdichtung 9 eine zweite Öffnung 10 (eine Luftein- und auslaßöffnung) mit Luftverbindung zum Fensterscheiben-Zwischenraum 3 (des Doppelscheiben-Kabinenfensters 20) installiert. Damit sich kein Wasserdampf an der (dem Hohlraum des Fensterscheiben-Zwischenraumes 3 zugewandten) Innenseite der Außenfensterscheibe 2, wie nach der herkömmlichen Lösung unvermeidbar, absetzt, wird-während des Druckausgleiches - die Wasserdampfkondensation der relativ feuchten Luft 14 durch deren Einleitung über die erste Öffnung 8 (Luftausgleichsbohrung) bereits im Kanal 7 geschehen. Dabei erfolgt die Belüftung des Fensterscheiben-Zwischenraumes 3 mittels der im Kanal 7 auskondensierten und dadurch getrockneten Luft 14, die über die zweite Öffnung 10 (Luftein- und-auslaßbohrung) in den Hohlraum zwischen der Innen - und Außenfensterscheibe 1, 2 strömt.

Bei der Belüftung des beschriebenen Doppelscheiben-Kabinenfensters 20 werden folgende Wirkungen auftreten:

Ein Großteil der Luftfeuchtigkeit wird auf dem Luftströmungsweg zur zweiten Öffnung 10 im Kanal 7 auskondensieren, nachdem die feuchte Luft 14 bei vorhandenen Druckunterschieden von der ersten Öffnung 8 in den Kanal 7 einströmte. Das wird dadurch möglich, weil der Kanal 7 teilweise mit durch den metallenen Schenkelrahmen 4 (als Bestandteil des metallenen Kabinenfensterrahmen 5) gebildet wird, der aufgrund seiner besseren Wärmeleitfähigkeit während des Fluges eine tiefere Temperatur als die (dem Hohlraum zugewandte) Innenseite der Außenfensterscheibe 2 einnimmt. Das Auskondensieren der Luftfeuchtigkeit der Luft 14 findet somit überwiegend im Kanal 7 (und nicht - im Vergleich der bemangelten herkömmlichen Lösung - im Fensterscheiben-Zwischenraum 3) statt.

Während sich das Flugzeug am Boden in wärmeren Luftschichten befindet, werden die gering gebildeten Eismengen, die sonst (nach der bemängelten herkömmlichen Lösung) zum Vereisen oder Beschlagen der (dem Hohlraum zugewandten) Scheibeninnenflächen des Doppelscheiben-Kabinenfensters 20 geführt haben, auftauen und in Gestalt von im Kanal 7 gebildetem Kondenswasser über die (im unteren Kabinen-Fensterbereich befindliche) erste Öffnung 8 abtropfen.

Bei Verwendung des Doppelscheiben-Kabinenfenster 20 erfolgt der Luftdruckausgleich ohne Zusatzinstallation eines aktiven Druckregelsystems, das dann dem Fensterscheiben-Zwischenraum 3 anzuschließen wäre. Ungeachtet dessen, daß damit eine Gewichtszunahme eintreten würde, wäre eine derartige Lösung nicht nur technisch aufwendiger und kostenintensiver zu realisieren, auch der Energieverbrauch und der Wartungsaufwand würden anwachsen. Mit dem angegebenen Doppelscheiben-Kabinenfenster wird trotzdem gewährleistet, daß der Fensterscheiben-Zwischenraum 3 - während des Fluges - mit getrockneter Luft 14 belüftet wird. Eine Modifikation von gegenwärtig im Flugzeug eingerüsteten Doppelscheiben-Kabinenfenstern mit dem vorgestellten Kanal 7 (Kondensationskanal) läßt sich durch einfache Montage ohne zusätzliche Anbauteile und ohne Veränderung der Flugzeugstruktur fertigungstechnisch leicht realisieren. Der Gebrauch der vorgestellten Doppelscheiben-Kabinenfenster-Lösung als Anpaßlösung für im Service befindliche Flugzeuge läßt sich durch einfaches Auswechseln des Doppelscheiben-Sets erledigen. Letztlich wird kein Anwachsen des Flugzeuggewichtes und des Wartungs- und Energieverbrauches eintreten, wobei der Passagierkomforts infolge der störungsfreien Sichtverhältnisse verbessert wird.

## Patentansprüche

1. Doppelscheiben-Kabinenfenster für ein Flugzeug, bei dem ein Fensterscheiben-Zwischenraum (3) durch eine Fensterdichtung (9), die innerhalb einem Kabinenfensterrahmen (5) aufliegt, begrenzt ist, wobei ein kanal (7) mit mindestens einer ersten Öffnung (8) und mit mindestens einer zweiten Öffnung (10), die an zueinander entfernten Stellen positioniert sind, vorgesehen ist, **dadurch, gekennzeichnet, dass** der Fensterdichtung (9) randseitig eine Zusatzdichtung (11) befestigt ist, die einem Schenkelrahmen (4), der Bestandteil des Kabinenfensterrahmens (5) ist, aufliegt, und dass die Zusatzdichtung (11) und ein Teilbereich der Fensterdichlung (9), der nicht dem Schenkelrahmen (4) aufliegt, den Kanal (7) einschließen, der mit vom Schenkelrahmen (4) eingeschlossen ist, und **dass** die Zusatzdichtung (11) mindestens von der ersten Öffnung (8) und die Fensterdichtung (11) mindestens von der zweiten Öffnung (10) durchdrungen ist.

2. Doppelscheiben-Kabinenfenster nach Anspruch 1, **dadurch gekennzeichnet, dass** mit der ersten Öffnung (8) eine von außerhalb der Zusatzdichtung (11) in den Kanal (7) geführte Luftverbindung realisiert ist, durch welche die aus dem inneren eines Flugzeug-Druckrumpfes entweichende Luft (14) in den Kanal (7) eindringt oder umgekehrt, und dass mit der zweiten Öffnung (10) eine vom Kanal (7) in den Fensterscheiben-Zwischenraum (3) geführte weitere Luftverbindung realisiert ist, durch welche die Ober den Kanal (7) strömende und am Kablnenfensterrahmen (5) auskondensierende Luft (14) in den Fensterscheiben-Zwischenraum (3) eindringt oder umgekehrt.

3. Doppelscheiben-Kabinenfenster nach Anspruch 1, **dadurch gekennzeichnet, dass** die beiden Öffnungen (8, 11) jeweils durch Bohrungen realisiert sind, wobei der Strömungsquerschnitt der zweiten Öffnung (11) größer dem Strömungsquerschnitt der ersten Öffnung (8) ist oder beide Öffnungen (8, 11) zumindestens den gleichen Strömungsquerschnitt besitzen.

4. Doppelscheiben-Kabinenfenster nach Anspruch 2, **dadurch gekennzeichnet, dass** die erste Öffnung (8) eine Luftausgleichsbohrung und die zweite Öffnung (10) eine Luftein- und -auslaßbohrung ist.

5. Doppelscheiben-Kabinenfenster nach Anspruch 1, **dadurch gekennzeichnet, dass** die Zusatzdichtung (11) als Dichtlippe ausgebildet ist, die nahe dem Schenkelende des Schenkelrahmens (4) gegen letzteren dichtet.

6. Doppelscheiben-Kabinenfenster nach Anspruch 1, **dadurch gekennzeichnet, dass** die Zusatzdichtung (11) der Fensterdichtung (9) zu einem gemeinsamen Dichtkörper integriert sind.

## Claims

1. Double-pane cabin window for an aircraft, in which an intervening space (3) between the window panes is delimited by a window seal (9) which, on the inside, rests on a cabin window-frame (5), wherein a duct (7) is provided which has at least one first opening (8) and at least one second opening (10) which are positioned at mutually remote points, **characterised in that** there is fastened to the window seal (9), at the edge, an additional seal (11) which rests on a flanged frame (4) which is a component of the cabin window-frame (5), and that the additional seal (11) and a partial region of the window seal (9), which partial region does not rest on the flanged frame (4), enclose the duct (7) which is also enclosed by the flanged frame (4), and that the additional seal (11) is penetrated at least by the first opening (8) and the window seal (11) is penetrated at least by the second opening (10).

2. Double-pane cabin window according to claim 1, **characterised in that** an air connection, which runs from outside the additional seal (11) into the duct (7) and through which the air (14) escaping from the interior of the pressurised fuselage of an aircraft penetrates into the duct (7) or *vice versa*, is realised with the first opening (8), and that a further air connection, which runs from the duct (7) into the intervening space (3) between the window panes and through which the air (14) flowing via the duct (7) and condensing out on the cabin window-frame (5) penetrates into the intervening space (3) between the window panes or *vice versa*, is realised with the second opening (10).

3. Double-pane cabin window according to claim 1, **characterised in that** the two openings (8, 11) are realised by bores in each case, the cross-section of flow of the second opening (11) being greater than the cross-section of flow of the first opening (8), or the two openings (8, 11) possessing at least the same cross-section of flow.

4. Double-pane cabin window according to claim 2, **characterised in that** the first opening (8) is an air-equalising bore and the second opening (10) is an air inlet and outlet bore.

5. Double-pane cabin window according to claim 1, **characterised in that** the additional seal (11) is constructed as a sealing lip which effects sealing against the flanged frame (4) close to the end of the flange of the latter.

6. Double-pane cabin window according to claim 1, **characterised in that** the additional seal (11) and the window seal (9) are integrated to form a common sealing body.

## Revendications

1. Fenêtre à double vitrage pour cabine d'aéronef, dans laquelle un espace intermédiaire entre des vitres a été délimité par un joint de fenêtre (9) reposant à l'intérieur d'un châssis de fenêtre de cabine (5), un canal (7) étant doté d'au moins une première ouverture (8) et d'au moins une deuxième ouverture (10) disposées en des emplacements éloignés l'un de l'autre, et **caractérisée en ce que** le joint de fenêtre (9) a été fixé sur le côté d'un joint supplémentaire (11) reposant sur un châssis coudé (4) faisant partie du châssis de la fenêtre de battant (5), **en ce que** le joint supplémentaire (11) et un segment partiel du joint de fenêtre (9) ne reposant pas sur le châssis coudé (4) enserrent le canal (7) enserré par le châssis coudé (4) et **en ce que** le joint supplémentaire (11) a été traversé au moins par la première ouverture (8) tandis que le joint de fenêtre (11) a été traversé par au moins la deuxième ouverture (10).

2. Fenêtre à double vitrage pour cabine d'aéronef selon la revendication 1, **caractérisée en ce que** une liaison à air guidée jusque dans le canal (7) , de l'extérieur du joint supplémentaire (11), et via laquelle de l'air (14) s'échappant de l'intérieur d'un fuselage pressurisé d'aéronef pénètre dans le canal (7) ou inversement a été aménagée avec la première ouverture (8), et **en ce que** une liaison à air supplémentaire guidée jusque dans l'espace intermédiaire entre les vitrages (3), à partir du canal (7), et via laquelle de l'air de condensation (14) s'écoulant via le canal (7) et se condensant contre le châssis de la fenêtre de la cabine (5) pénètre dans l'espace intermédiaire entre les vitrages 3), a été aménagée avec la deuxième ouverture (10).

3. Fenêtre à double vitrage pour cabine d'aéronef selon la revendication 1, **caractérisée en ce que** les deux ouvertures (8, 11) ont été aménagées par l'intermédiaire d'alésages, la section transversale d'écoulement de la deuxième ouverture (11) étant plus grande que la section transversale d'écoulement de la première ouverture (8) ou les deux ouvertures (8, 11) présentant au moins la même section transversale d'écoulement.

4. Fenêtre à double vitrage pour cabine d'aéronef selon la revendication 2, **caractérisée en ce que** la première ouverture (8) est un alésage de compensation d'air et la deuxième ouverture un alésage d'admission et d'évacuation d'air.

5. Fenêtre à double vitrage pour cabine d'aéronef selon la revendication 1, **caractérisée en ce que** le joint supplémentaire (11) a été conçu sous la forme d'une lèvre d'étanchéité fermée contre le châssis coudé (4), près de l'extrémité coudée de ce dernier.

6. Fenêtre à double vitrage pour cabine d'aéronef selon la revendication 1, **caractérisée en ce que** le joint supplémentaire (11) a été intégré au joint de fenêtre (9) pour former un corps d'étanchéité commun.
